# EUROPÄISCHE PATENTSCHRIFT

(11) **EP 2 953 513 B1**
(45) Veröffentlichungstag und Bekanntmachung des Hinweises auf die Patenterteilung: **09.01.2019**
(21) Anmeldenummer: 14707101.3
(22) Anmeldetag: 27.01.2014
(51) Int. Cl.: A47J 37/06

(54) **BACKPLATTENANORDNUNG FÜR EINEN WAFFELBACKAUTOMATEN**
BAKING-PLATE ASSEMBLY FOR A WAFFLE-BAKING MACHINE
SYSTÈME DE PLAQUES DE CUISSON POUR UN AUTOMATE DE CUISSON DE GAUFRES

(30) Priorität: 06.02.2013 DE 102013101180
(43) Veröffentlichungstag der Anmeldung: 16.12.2015
(73) Patentinhaber: Hebenstreit GmbH, 64546 Mörfelden-Walldorf (DE)
(72) Erfinder: WACKER, Siegfried, 64319 Pfungstadt (DE); MAI, Harald, 64289 Darmstadt (DE)
(74) Vertreter: Katscher Habermann Patentanwälte
(86) Internationale Anmeldenummer: PCT/EP2014/051479
(87) Internationale Veröffentlichungsnummer: WO 2014/122038

(56) Entgegenhaltungen:
- EP-A2- 1 913 853
- DE-A1-102005 014 561
- DE-C1- 3 643 737
- FR-A1- 2 365 293

## Beschreibung

Die Erfindung betrifft eine Backplattenanordnung für einen Waffelbackautomaten mit zwei schwenkbar miteinander verbundenen Backplatten, wobei mindestens eine Backplatte jeweils bezüglich einer Backfläche konvex vorgespannt ist, so dass bei geschlossener Backplattenanordnung vor Beginn eines Backvorgangs ein Abstand in einem mittleren Bereich der Backplatten kleiner ist als ein Abstand in einem Randbereich der Backplatten, um Verformungen der Backplatten während des Backvorgangs auszugleichen.
Solche Backplattenanordnungen werden in industriellen Waffelbackautomaten zur vollautomatischen Herstellung von Waffelblättern eingesetzt. Zu diesem Zweck wird bei geöffneter Backplattenanordnung eine vorgegebene Teigmenge auf die Backfläche einer der Backplatten aufgebracht und die Backplattenanordnung geschlossen. Anschließend wird der zwischen den Backplattenanordnungen angeordnete Teig gebacken. Um die Backplatten im geschlossenen Zustand zu fixieren, weisen herkömmliche Backplattenanordnungen geeignete Verschlussvorrichtungen auf.
Unterschiedlich ausgestaltete und aus dem Stand der Technik bekannte Backplattenanordnungen werden in den Druckschriften FR 2 365 293 A1, DE 10 2005 014 561 A1, US 2010 162 903 und DE 36 43 737 C1 beschrieben.

Während dieses Backprozesses entsteht zwischen den Backplatten Dampf. Dieser Dampf entweicht durch einen Dampfaustrittsbereich. Beispielsweise kann der Dampf durch einen an den Rändern der Backplatten in dem geschlossenen Zustand ausgebildeten Spalt entweichen.

Ein durch den während des Backprozesses erzeugten Dampf zwischen den Backplatten hervorgerufener Dampfdruck kann so groß werden, dass die Backplatten durch den Dampfdruck vor allem in dem mittleren Bereich der Backplatten konkav nach außen verformt werden. Solche besonders hohen Dampfdrücke treten unter anderem bei verhältnismäßig großen Backplatten auf, bei denen der während des Backens entstehende Dampf nur unzureichend über den Dampfaustrittsbereich abgeführt werden kann. Durch diese Verformung wird das Backergebnis beeinträchtigt, da die Verformung der Backplatten oftmals ein Vielfaches größer als die vorgegebene Dickentoleranz für die Dicke des Backprodukts sein kann.

Um dieser Verformung der Backplatten entgegenzuwirken ist es aus der Praxis bekannt, eine oder beide Backplatten üblicherweise konvex zu verformen und so vorzuspannen, dass die durch den Dampfdruck hervorgerufene Verformung der Backplatten zu ebenen Backflächen der Backplatten führt. Die für ein zufriedenstellendes Backergebnis erforderliche Vorspannung der Backplatten ist von verschiedenen Einflussgrößen abhängig und muss durch ein aufwendiges Justierungsverfahren gegebenenfalls in mehreren Schritten in jedem Einzelfall und für jedes Backprodukt gesondert ermittelt werden.

In Abhängigkeit der Größe der verwendeten Backplatten und in Abhängigkeit des jeweils verwendeten Teigs kann allerdings zum Ausgleich der Verformung eine so starke konvexe Vorspannung erforderlich sein, dass die Backflächen in dem mittleren Bereich bei geschlossener Backplattenanordnung aneinander anliegen. Dadurch wird nach Aufbringen des Teigs auf eine der Backflächen bei Verschließen der Backplattenanordnung der Teig aus dem mittleren Bereich verdrängt, wodurch der Backvorgang beeinträchtigt wird.

Als Aufgabe der Erfindung wird es daher angesehen, Backplattenanordnungen mit konvex vorgespannten Backplatten so weiter zu entwickeln, dass der Backvorgang auch bei Verwendung verhältnismäßig großer Backplatten und beliebigen Teigsorten nicht beeinträchtigt wird.

Diese Aufgabe wird erfindungsgemäß dadurch gelöst, dass die Backplattenanordnung eine Anlageeinrichtung aufweist, die so an der Backplattenanordnung angeordnet ist, dass die Backplatten einer geschlossenen Backplattenanordnung einen Abstand zueinander aufweisen. Auf diese Weise kann wirkungsvoll verhindert werden, dass der Abstand der Backplatten bzw. Backflächen der geschlossenen Backplattenanordnung so gering wird, dass beim Backen in dem mittleren Bereich eines ausgebackenen Waffelblatts eine sehr dünne Stelle oder eine Fehlstelle entsteht.

Durch eine solche Anlageeinrichtung wird die konvex vorgespannte Backplatte bzw. werden die konvex vorgespannten Backplatten entgegen der durch die konvexe Vorspannung auftretenden Verformung der Backplatte bzw. der Backplatten so in Richtung ebener Backflächen zurückverformt, dass die durch die konvexe Vorspannung hervorgerufene Verformung mindestens teilweise ausgeglichen wird. Dabei bleibt allerdings die dem durch den austretenden Dampf während des Backvorgangs auftretenden Dampfdruck entgegenwirkende und durch die konvexe Vorspannung erzeugte notwendige Vorspannungskraft erhalten, so dass durch die durch den Dampfdruck hervorgerufene Verformung der Backplatten der Backvorgang nicht beeinträchtigt wird. Die Backplatten werden erst bei Überschreiten eines durch die Vorspannkraft vorgegeben Grenzdampfdrucks verformt.

Bei Versuchen hat sich gezeigt, dass der beim Backen auftretende Dampfdruck zu Beginn des Backvorgangs zunächst stark ansteigt und dann langsam wieder abfällt. Der zunächst flüssige Teig härtet in einem im Wesentlichen durch den verwendeten Waffelteig beeinflussten Zeitbereich bei abfallendem Dampfdruck aus. Durch die Anlageeinrichtung kann einerseits ein Berühren der konvex vorgespannten Backplatten zu Beginn des Backprozesses vermieden werden und andererseits eine Spaltbreite zu einem Zeitpunkt des Backprozesses vorgegeben werden, an dem der Waffelteig aushärtet. Zwischen diesen Zeitpunkten kann eine dampfdruckbedingte Verformung der Backplatten zugelassen werden, die zu einer Auswölbung der Backplatten führt, da der definierte Abstand der Backplatten erst in einem Bereich geringeren Dampfdrucks, bei dem der Waffelteig aushärtet, erreicht sein muss.

Daher ist es erfindungsgemäß möglich, die erforderliche Vorspannkraft so an den beim Backen auftretenden Dampfdruck anzupassen, dass die vorgespannten Backplatten zu Beginn des Backvorgangs und ab dem Zeitpunkt des Aushärtens bis zum Ende des Backvorgangs durch die Anlageeinrichtung abgestützt werden und einen durch die Anlageeinrichtung vorgegebenen Abstand aufweisen. Auf diese Weise können die Backplatten dünner ausgestaltet werden, da eine Verformung der Backplatten zugelassen wird.

Zweckmäßigerweise wird die Vorspannkraft so vorgegeben, dass die Vorspannkraft größer ist als eine bei dem Backvorgang auftretende und auf die Backplatten entgegen der Vorspannkraft wirkende Dampfdruckkraft. Auf diese Weise wird die Backplatte in dem geöffneten Zustand stärker verformt, so dass erfindungsgemäß auch bei kleineren Backplatten eine Anlageeinrichtung zum Ausgleich der Verformung in dem geschlossenen Zustand der Backplattenanordnung verwendet wird.

Durch die hohe Vorspannkraft liegen die Backplatten während des gesamten Backprozesses an der Anlageeinrichtung an und weisen einen durch die Anlageeinrichtung vorgegebenen Abstand zueinander auf. Auf diese Weise ist es nicht erforderlich, die Vorspannkraft an die jeweils verwendeten Teigsorten bzw. an den bei den jeweils verwendeten Teigsorten auftretenden Dampfdruck anzupassen. Zudem wird eine Justierung der auf die Backplatten ausgeübten Vorspannkraft, bzw. der erzwungenen Verformung der Backplatten erleichtert und gegebenenfalls nicht mehr notwendig.

Zudem ist es auf diese Weise möglich eine Verformung eines umlaufenden Rands der Backplatten durch den bei dem Backvorgang entstehenden Dampfdruck zu vermeiden und einen längs des umlaufenden Rands konstanten Dampfaustritt zu erreichen. Dadurch kann ein besonders gleichmäßiges Backergebnis erreicht werden. Durch eine Verformung des umlaufenden Rands wird der vorteilhafterweise über die gesamte Backplattenfläche konstante Dampfdruck so beeinflusst, dass der Dampfdruck bereichsweise unterschiedlich ist und das Backergebnis beeinflusst wird.

Erfindungsgemäß ist vorteilhafterweise vorgesehen, dass die Backplattenanordnung ein Backzangengestell mit zwei schwenkbar miteinander verbundenen Gestellteilen aufweist, wobei die Backplatten an den Gestellteilen angeordnet sind. Backplatenanordnungen mit an Gestellteilen angeordneten Backplatten sind besonders kostengünstig herzustellen.

Erfindungsgemäß liegen die Backplatten abschnittsweise an den Gestellteilen an. Die Gestellteile sind vorteilhafterweise so ausgestaltet, dass die Gestellteile gemeinsam mit den Backplatten konvex vorgespannt werden können und/oder Vorspannungskräfte der Backplatten aufnehmen können. Bei der durch die Anlageeinrichtung hervorgerufenen Verformung der Backplatten entgegen der durch die konvexe Vorspannung auftretenden Verformung der Backplatten wirken auf die Gestellteile Vorspannungskräfte durch die die Gestellteile verformt werden, so dass die dem Dampfdruck entgegenwirkenden Vorspannungskräfte von den Gestellteilen aufgebracht werden und auf die durch die Anlageeinrichtung in Richtung ebener Backflächen verformten Backplatten wirken.

Die Backplatten und die Gestellteile werden vorteilhafterweise so vorgespannt, dass die Backplatten und die Backzangen in entgegengesetzte Richtungen verformt sind, wobei ein Abstand der Backplatten zu den Backzangen in einem Randbereich kleiner ist als in einem mittleren Bereich. Durch die Anlageeinrichtung werden die vorgespannten Backplatten in Richtung ebener Backflächen zurückverformt, wodurch die abschnittsweise an den Backplatten anliegenden Gestellteile weiter verformt und die Vorspannung der Gestellteile vergrößert wird. Die dem Dampfdruck entgegenwirkende Vorspannungskraft wird auf diese Weise von den Gestellteilen aufgebracht, während die Backflächen näherungsweise eben sind.

Die Verschlussvorrichtungen herkömmlicher Backplattenanordnungen weisen üblicherweise ein an einer Backplatte oder einem Gestellteil schwenkbar angeordnetes erstes Verschlussteil und ein an einer gegenüberliegenden Backplatte oder an einem gegenüberliegenden Gestellteil angeordnetes zweites Verschlussteil auf, wobei das erste Verschlussteil und das zweite Verschlussteil miteinander in Eingriff stehen, wenn die Backplattenanordnung geschlossen ist. Zum Verschließen und Öffnen der Backplattenanordnung ist es erforderlich, den Abstand der Backplatten und Gestellteile soweit zu reduzieren, dass das erste Verschlussteil mit dem zweiten Verschlussteil in Eingriff gebracht werden kann oder das erste Verschlussteil und das zweite Verschlussteil voneinander gelöst werden können. Dieser Abstand ist geringer als der bei dem Backvorgang erwünschte Abstand bzw. als eine Dicke einer gebackenen Waffel. Durch die Anlageeinrichtung wird als zusätzlicher Vorteil erreicht, dass sich die Backplatten beim Öffnen und Verschließen der Backplattenanordnung in einem Bereich in dem die Verschlussvorrichtung angeordnet ist leicht verformen, so dass der Abstand der Backplatten und Gestellteile ausreichend gering ist, um die Verschlussteile miteinander in Eingriff zu bringen oder voneinander zu lösen. Auf diese Weise wird insbesondere eine Beschädigung der gebackenen Waffel beim Öffnen der Backplattenanordnung vermieden.

Um den Abstand der Backflächen der Backplatten der geschlossenen Backplattenanordnung einfach an die jeweils erforderliche konvexe Vorspannung der Backplatte oder der Backplatten anpassen zu können, ist erfindungsgemäß vorgesehen, dass mindestens ein Anlageelement einer Anlageeinrichtung verstellbar ausgestaltet ist, so dass der Abstand der Backplatten der geschlossenen Backplattenanordnung einstellbar ist. Beispielsweise kann es sich bei dem Anlageelement um ein in dem mittleren Bereich einer Backplatte angeordneten Gewindebolzen handeln, der bei geschlossener Backplattenanordnung an der gegenüberliegenden Backplatte anliegt. Indem der Gewindebolzen weiter in die Backplatte hineingedreht oder herausgedreht wird, kann der Abstand der Backflächen bzw. Backplatten in dem geschlossenen Zustand einfach variiert werden.

Vorteilhafterweise ist erfindungsgemäß vorgesehen, dass die Anlageeinrichtung an einer Backplatte angeordnet ist. Erfindungsgemäß kann es sich bei der Anlageeinrichtung um einen in einem Bereich der Backfläche einer Backplatte angeordneten Stift oder Zapfen handeln, der bei geschlossener Backplattenanordnung an der Backfläche der gegenüberliegenden Backplatte anliegt und auf diese Weise den Abstand der Backflächen bzw. Backplatten bei geschlossener Backplattenanordnung vorgibt.

Die Anlageeinrichtung kann erfindungsgemäß aber auch an einer Außenfläche der Backplatte angeordnet sein, wie beispielsweise einer der Backfläche einer Backplatte gegenüberliegenden Oberfläche der Backplatte. Erfindungsgemäß ist es möglich, ein an der Oberfläche der Backplatte höhenverstellbar angeordnetes Anschlagsprofil anzuordnen, das eine Seitenfläche der Backplatte umgreift und bei geschlossener Backplattenanordnung an einem Rand der Backfläche der gegenüberliegenden Backplatte anliegt.

Um möglichst gleichmäßige Waffelblätter ohne Fehlstellen mit Hilfe der Backplattenanordnung herstellen zu können, ist erfindungsgemäß vorgesehen, dass die Anlageeinrichtung an einem Rand der Backfläche angeordnet ist. Indem die Anlageeinrichtung außerhalb der Backfläche an dem Rand angeordnet ist, steht die gesamte Backfläche zur Herstellung eines Waffelblattes zur Verfügung.

Der Abstand der Backflächen bei geschlossener Backplattenanordnung kann erfindungsgemäß besonders wirkungsvoll dadurch vorgegeben werden, dass die Anlageeinrichtung in dem mittleren Bereich an der Backplatte angeordnet ist. Da durch die konvexe Vorspannung der Backplatte bzw. der Backplatten eine Verformung bzw. Wölbung in dem mittleren Bereich hervorgerufen wird, die mit Hilfe der Anlageeinrichtung mindestens teilweise ausgeglichen werden soll, ist die Anordnung der Anlageeinrichtung in dem mittleren Bereich an der Backplatte besonders wirkungsvoll.

Um die gesamte Backfläche zur Herstellung von Waffelblättern verwenden zu können und der durch die konvexe Vorspannung in dem mittleren Bereich der Backplatte hervorgerufenen Verformung bzw. Wölbung wirkungsvoll entgegenwirken zu können ist erfindungsgemäß vorgesehen, dass die Anlageeinrichtung in einem mittleren Bereich einer der Backfläche gegenüberliegenden Oberseite der Backplatte an der Backplatte angeordnet ist.

Bei einer besonders vorteilhaften Ausgestaltung der erfindungsgemäßen Backplattenanordnung ist vorgesehen, dass die Anlageeinrichtung an einem Gestellteil angeordnet ist. Auf diese Weise können herkömmliche Backplatten eingesetzt werden und einfach ausgetauscht werden.

Vorteilhafterweise ist erfindungsgemäß vorgesehen, dass die Anlageeinrichtung mehrere Anlageelemente aufweist. Beispielsweise kann je ein Anlageelement auf gegenüberliegenden Seiten an dem Rand der Backfläche angeordnet werden. Es ist aber auch möglich und erfindungsgemäß vorgesehen, dass auf gegenüberliegenden Seiten der Backplatte an der Oberseite der Backplatte jeweils ein Anschlagsprofil angeordnet ist.

Vorteilhafterweise ist erfindungsgemäß vorgesehen, dass zwei Anlageelemente vorgesehen sind, die so an der Backplattenanordnung angeordnet sind, dass die Anlageelemente bei geschlossener Backplattenanordnung aneinander anliegen. Auf diese Weise ist es nicht erforderlich, dass die Anlageeinrichtung an einer Backfläche oder an dem Rand der Backfläche anliegt, um den erforderlichen Abstand der Backflächen bzw. Backplatten in dem geschlossenen Zustand der Backplattenanordnung vorzugeben.

Bei einer besonders vorteilhaften Ausgestaltung der erfindungsgemäßen Backplattenanordnung ist vorgesehen, dass ein erstes, verstellbar ausgestaltetes Anlageelement einer ersten Oberseite in einem mittleren Bereich der ersten Oberseite einer ersten Backplatte angeordnet ist und dass ein zweites, verstellbar ausgestaltetes Anlageelement einer zweiten Oberseite in einem mittleren Bereich der zweiten Oberseite an einer zweiten Backplatte angeordnet ist, wobei das erste Anlageelement und das zweite Anlageelement bei geschlossener Backplattenanordnung aneinander anliegen. Vorteilhafterweise sind das erste Anlageelement und das zweite Anlageelement höhenverstellbar ausgestaltet.

Damit der beim Backen entstehende Dampf möglichst schnell aus der geschlossenen Backplattenanordnung entweichen kann, ist erfindungsgemäß vorgesehen, dass die Anlageeinrichtung einen Dampfaustrittsbereich der geschlossenen Backplattenanordnung lediglich abschnittsweise verdeckt. Vorteilhafterweise wird der Dampfaustrittsbereich durch die Anlageeinrichtung nicht verdeckt.

Um vorhandene Backplattenanordnung einfach nachrüsten zu können und beschädigte Anlageeinrichtungen einfach austauschen zu können ist erfindungsgemäß vorgesehen, dass die Anlageeinrichtung lösbar an der Backplattenanordnung angeordnet ist.

Vorteilhafterweise ist erfindungsgemäß vorgesehen, dass die Backplatte in einem Bereich in dem die Anlageeinrichtung an der Backplattenanordnung angeordnet ist, konvex vorgespannt ist. Durch eine solche Vorspannung kann ein Dampfdruck vorgegeben werden, bis zu dem die Anlageeinrichtung an der Backplatte oder dem Gestellteil anliegt oder bis zu dem zwei Anlageelemente aneinander anliegen, wobei bis zum Erreichen dieses Dampfdrucks die Backflächen einen konstanten Abstand zueinander aufweisen.

Bei einer besonders vorteilhaften Ausgestaltung der erfindungsgemäßen Backplattenanordnung ist vorgesehen, dass die Anlageeinrichtung mindestens ein auf der der Backfläche gegenüberliegenden Oberseite einer Backplatte angeordnetes Stützelement aufweist, wobei sich die Backplatte bei einer dampfdruckbedingten Verformung der Backplatte gegen das Stützelement abstützt. Auf diese Weise kann eine erforderliche konvexe Vorspannung verringert werden, da eine bei einem vorgegebenen Dampfdruck auftretende maximale Verformung der Backplatte verringert ist.

Weitere vorteilhafte Ausgestaltungen der erfindungsgemäßen Backplattenanordnung werden anhand eines in der Zeichnung dargestellten Ausführungsbeispiels näher erläutert.

Es zeigt:
Fig. 1 eine schematisch dargestellte Schnittansicht einer Backplattenanordnung,
Fig. 2 eine schematische Ansicht eines der in Fig. 1 dargestellten Gestellteile mit einer Backplatte und einer Anlageeinrichtung,
Fig. 3 eine schematisch dargestellte Detailansicht der in Fig. 1 dargestellten Backplattenanordnung mit einer Anlageeinrichtung,
Fig. 4 eine schematisch dargestellte Schnittansicht einer Backplatte mit einer mittig an der Backplatte angeordneten Anlageeinrichtung,
Fig. 5 eine schematisch dargestellte Ansicht einer Backplatte mit an einem Rand einer Backfläche an der Backplatte angeordneten Anlageelementen,
Fig. 6 ein schematisch dargestelltes Diagramm eines Dampfdruckverlaufs während eine Backprozesses,
Fig. 7a eine schematische Darstellung einer aus dem Stand der Technik bekannten Auswölbung einer zweiseitig unterstützten Backplatte bei einem vorgegebenen Dampfdruck,
Fig. 7b eine schematische Darstellung einer Auswölbung einer Backplatte mit einem Stützelement bei einem vorgegebenen Dampfdruck, der dem Dampfdruck bei der in Fig. 7a dargestellten Situation entspricht,
Fig. 8a eine schematisch Darstellung einer Backplattenanordnung mit an konvex vorgespannten Gestellteilen gelagerten Backplatten in einem geöffneten Zustand,
Fig. 8b eine schematische Darstellung der in Fig. 8a abgebildeten Backplattenanordnung in einem geschlossen Zustand.

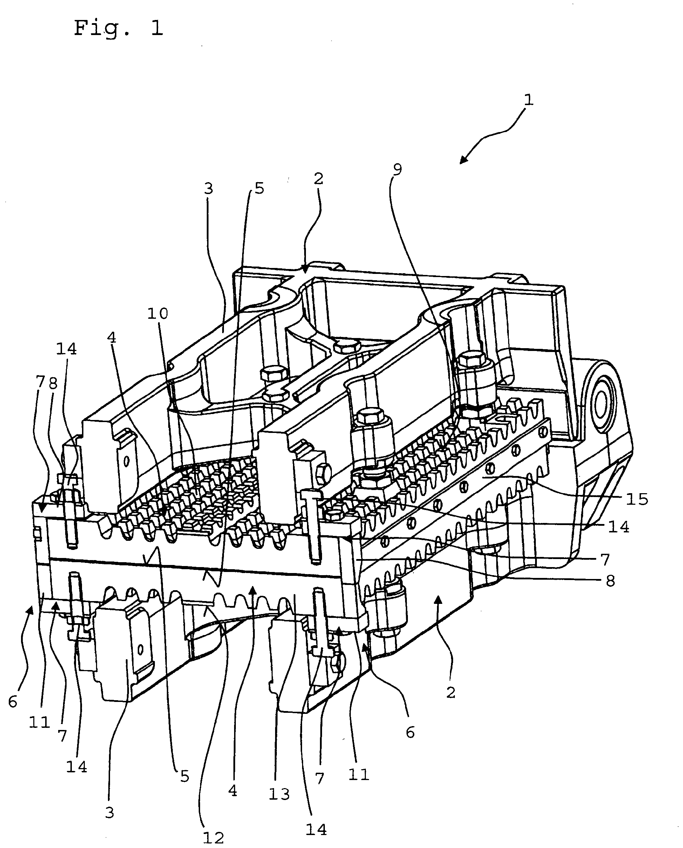

In den Figuren 1, 2 und 3 sind verschiedene Ansichten einer Backplattenanordnung 1 dargestellt. Fig. 1 zeigt eine schematische Schnittdarstellung einer Backplattenanordnung 1 mit einem Backplattenanordnungsgestell 2, das zwei schwenkbar miteinander verbundene Gestellteile 3 aufweist. An den Gestellteilen 3 ist jeweils eine Backplatte 4 angeordnet. Die Backplatten 4 sind jeweils bezüglich einer Backfläche 5 der Backplatten 4 konvex vorgespannt. Die Backplattenanordnung 1 ist in dieser Darstellung geschlossen abgebildet.

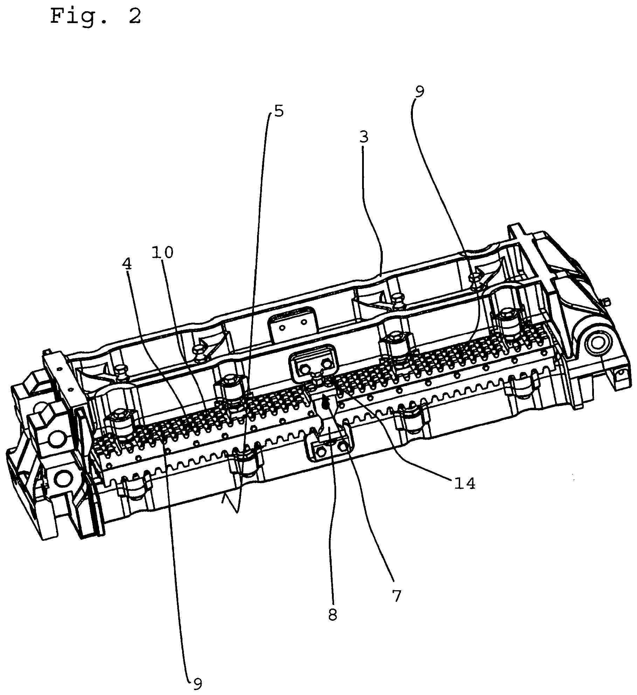

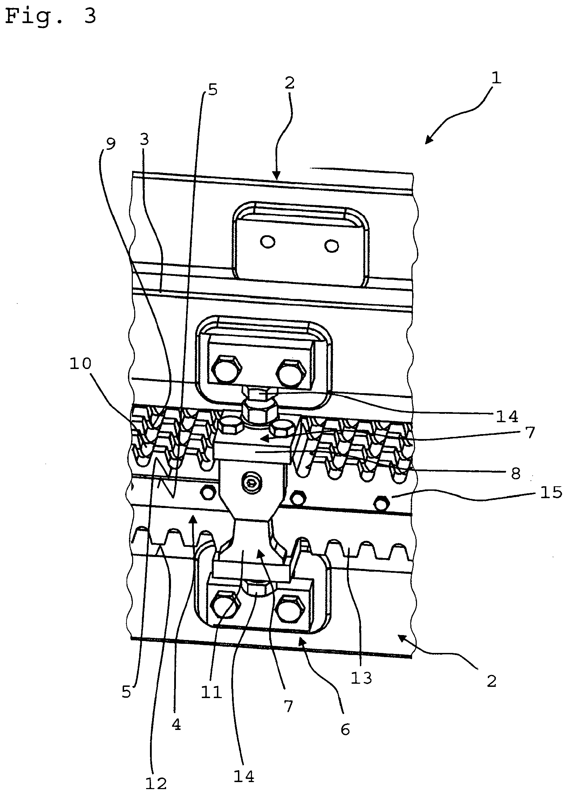

Fig. 2 zeigt eine schematische Ansicht eines der in Fig. 1 dargestellten Gestellteile 3 mit einer Backplatte 4. Die Backplattenanordnung 1 weist eine Anlageeinrichtung 6 auf. Eine Detailansicht der Anlageeinrichtung 6 ist in Fig. 3 dargestellt. Die Anlageeinrichtung 6 besteht aus vier Anlageelementen 7, wobei jeweils zwei Anlageelemente 7 auf gegenüberliegenden Seiten der Backplattenanordnung 1 an den Backplatten 4 angeordnet sind. Dabei ist jeweils ein erstes, verstellbar ausgestaltetes Anlageelement 8 an einer ersten Oberseite 9 einer ersten Backplatte 10 in einem mittleren Bereich der ersten Oberseite 9 angeordnet und ein zweites, verstellbar ausgestaltetes Anlageelement 11 an einer zweiten Oberseite 12 einer zweiten Backplatte 13 in einem mittleren Bereich der zweiten Oberseite 12 angeordnet.

In dem geschlossenen Zustand der Backplattenanordnung 1 liegen jeweils das erste Anlageelement 8 und das zweite Anlageelement 11 aneinander an. Die ersten Anlageelemente 8 und die zweiten Anlageelemente 11 sind jeweils über eine Verstellschraube 14 an der ersten Oberseite 9 und der zweiten Oberseite 12 höhenverstellbar festgelegt. Auf diese Weise kann ein Abstand der Backflächen 5 der Backplatten 4 einfach an die jeweiligen Anforderungen angepasst werden.

Es ist auch möglich, die Anlageelemente 7 durch Lösen der Verstellschrauben 14 von den Backplatten 4 zu entfernen und durch neue Anlageelemente 7 zu ersetzen. Beim Backen kann Dampf aus der Backplattenanordnung 1 aus einem Dampfaustrittsbereich 15 entweichen. Der Dampfaustrittsbereich 15 entspricht einem Spalt zwischen den Backflächen 5 bzw. einem Rand der Backflächen 5 in dem geschlossenen Zustand der Backplattenanordnung 1.

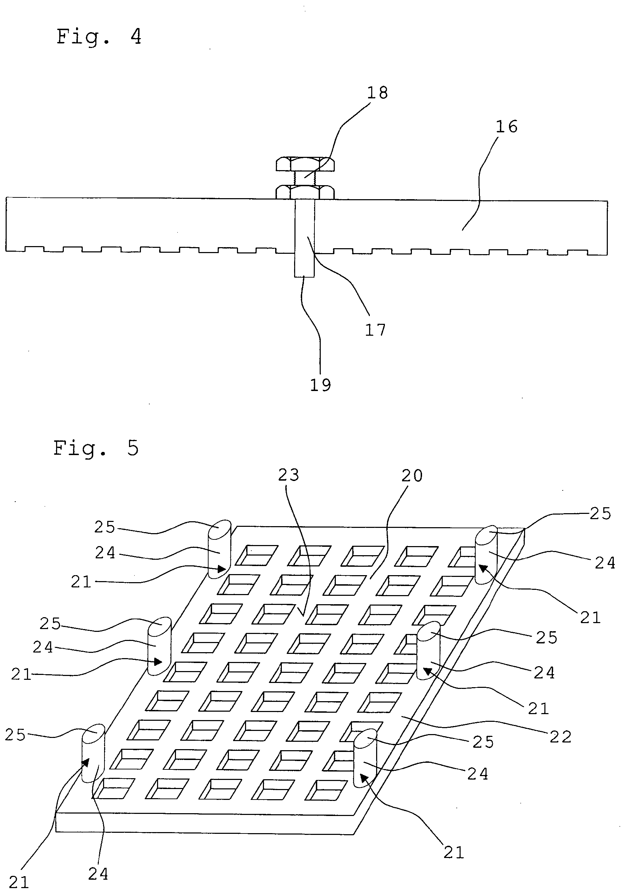

Fig. 4 zeigt eine schematisch dargestellte Schnittansicht einer Backplatte 16 mit einer in einer Mitte der Backplatte 16 angeordneten Anlageeinrichtung 17, wobei die Anlageeinrichtung 17 ein Anlageelement ist. Die Anlageeinrichtung 17 ist über eine Verstellschraube 18 an der Backplatte 16 höhenverstellbar angeordnet. Die Anlageeinrichtung 16 und die Verstellschraube 18 sind einstückig ausgestaltet.

Die Backplatte 16 kann in einem herkömmlichen Backplattenanordnungsgestell einer Backplattenanordnung verwendet werden, wobei ein Kopf 19 der Anlageeinrichtung 17 an einer Backfläche einer gegenüberliegenden Backplatte anliegt, wenn die Backplattenanordnung geschlossen ist.

In Fig. 5 ist schematisch eine Ansicht einer Backplatte 20 mit einer Anlageeinrichtung 21 dargestellt. Die Anlageeinrichtung 21 weist sechs längs eines Rands 22 einer Backfläche 23 der Backplatte 20 angeordnete, zylinderförmige Anlageelemente 24 auf.

Die Backplatte 20 kann ebenfalls in einem herkömmlichen Backplattenanordnungsgestell einer Backplattenanordnung verwendet werden, wobei Köpfe 25 der Anlageelemente 24 an einem Rand einer Backfläche einer gegenüberliegenden Backplatte anliegen, wenn die Backplattenanordnung geschlossen ist.

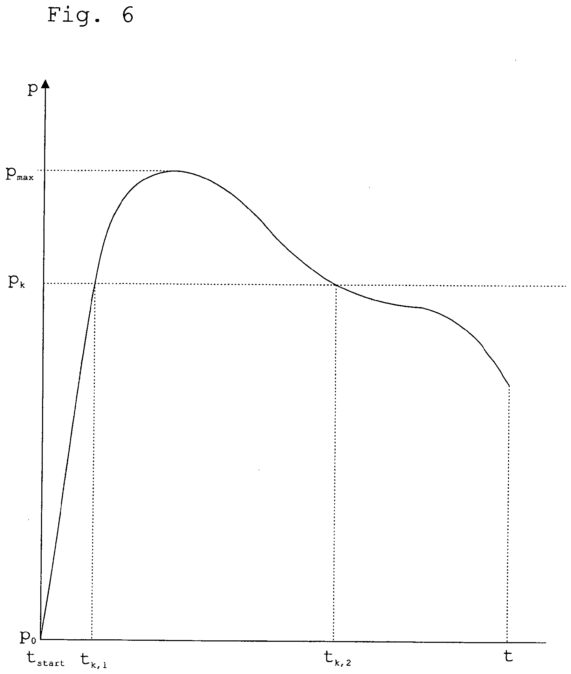

Bei Versuchen hat sich ein in Fig. 6 schematisch dargestellter Dampfdruckverlauf innerhalb einer nicht dargestellten geschlossenen Backplattenanordnung mit zwei Backplatten und einer Anlageeinrichtung während eines Backvorgangs eingestellt. In dem dargestellten Diagramm ist ein Dampfdruckverlauf eines Dampfdrucks p über eine Backzeit t aufgetragen.

Der Backprozess beginnt bei tₛₜₐᵣₜ und einem dem Umgebungsdruck entsprechenden Druck p₀ zwischen den Backplatten. Durch die Erhitzung steigt der Dampfdruck bzw. der Druck zwischen den Backplatten p an, bis zu dem Zeitpunkt t_{k,1} ein Druck pₖ erreicht ist. Bei Erreichen des Drucks pₖ wird der Druck p so groß, dass die Backplatten nach außen gewölbt werden und sich ein Abstand der Backplatten in einem mittleren Bereich der Backplatten vergrößert.

Der Druck p steigt weiter an bis ein maximaler Dampfdruck pₘₐₓ erreicht ist. Anschließend fällt der Druck p kontinuierlich ab. Zu einem Zeitpunkt t_{k,2} ist der Druck p auf das Niveau pₖ abgefallen und der Abstand der Backplatten ist im Wesentlichen durch die Anlageeinrichtung vorgegeben. Zu oder kurz nach diesem Zeitpunkt t_{k,2} beginnt der Waffelteig auszuhärten.

Die konvexe Vorspannung der Backplatten ist also so an den Backprozess angepasst, dass zu Beginn des Aushärtens des Waffelteigs der Abstand der Backplatten durch die Anlageeinrichtung vorgegeben wird, so dass eine Waffel mit vorgegebener Dicke hergestellt werden kann. Gleichzeitig wird mit Hilfe der Anlageeinrichtung vermieden, dass sich die konvex vorgespannten Backplatten zum Zeitpunkt t₀ berühren.

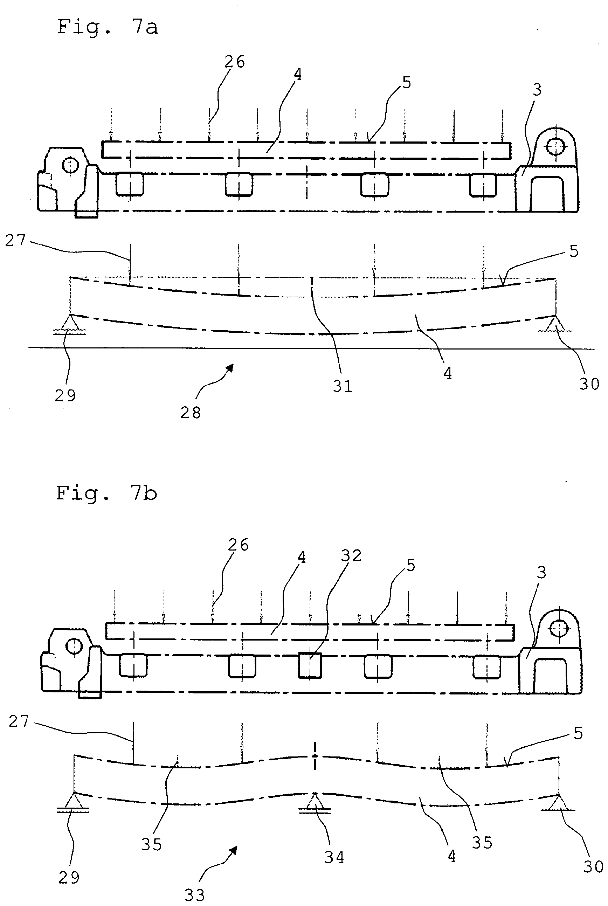

Fig. 7a zeigt eine schematische Darstellung einer aus dem Stand der Technik bekannten Anordnung einer Backplatte 4 an einem Gestellteil 3. Während eines Backprozesses wirkt auf eine Backfläche 5 der Backplatte 4 eine durch Pfeile gekennzeichnete, flächig verteilte Druckkraft 26.

Durch diese Druckkraft 26 wird die Backplatte 4 verformt und erreicht bei einer bestimmten, durch Pfeile gekennzeichneten Druckkraft 27 den in dem unteren Bereich der Fig. 7a schematisch dargestellten Verformungszustand 28 der Backplatte 4. In der Darstellung ist jeweils ein die verteilten Druckkräfte 26 und 27 kennzeichnender Pfeil exemplarisch mit einem Bezugszeichen gekennzeichnet.

Die Backplatte 4 ist an gegenüberliegenden Seiten an dem Gestellteil 3 gelagert und stützt sich in Richtung der Druckkraft 27 gegen das Gestellteil 3 ab. Dies ist in der Darstellung des Verformungszustands 28 durch ein Loslager 29 und ein Festlager 30 gekennzeichnet. In diesem Verformungszustand 28 weist die Backplatte 4 in der Mitte der Backplatte 4 eine maximale Verformung 31 auf.

In Fig. 7b ist schematisch ein an einem Gestellteil 3 festgelegte Backplatte 4 dargestellt, wobei an dem Gestellteil 3 ein Stützelement 32 angeordnet ist. Durch eine auf die Backplatte 4 wirkende und durch Pfeile gekennzeichnete Druckkraft 26 wird die Backplatte verformt.

Wird eine bestimmte, durch Pfeile gekennzeichnete Druckkraft 27 erreicht, weist die Backplatte 4 den in dem unteren Bereich der Fig. 7b dargestellten Verformungszustand 33 auf. In der Darstellung ist jeweils ein die verteilten Druckkräfte 26 und 27 kennzeichnender Pfeil exemplarisch mit einem Bezugszeichen gekennzeichnet.

In diesem Verformungszustand 33 ist die Backplatte 4 so weit verformt, dass die Backplatte an dem Stützelement 32 anliegt. Ein Anlagepunkt der Backplatte 4 an dem Stützelement 32 ist bei dem Verformungszustand 33 durch ein weiteres Loslager 34 gekennzeichnet.

In dem Verformungszustand 33 wird die Backplatte zwischen den Lagern 29 und 34, sowie zwischen den Lagern 30 und 34 ausgewölbt. Eine Verformung 35 ist kleiner als die Verformung 31 bei der in Fig. 7a dargestellten Anordnung. Durch die Verwendung eines zusätzlichen Stützelements 32 kann daher die Backplatte 4 mit einer geringeren konvexen Vorspannung eingesetzt werden.

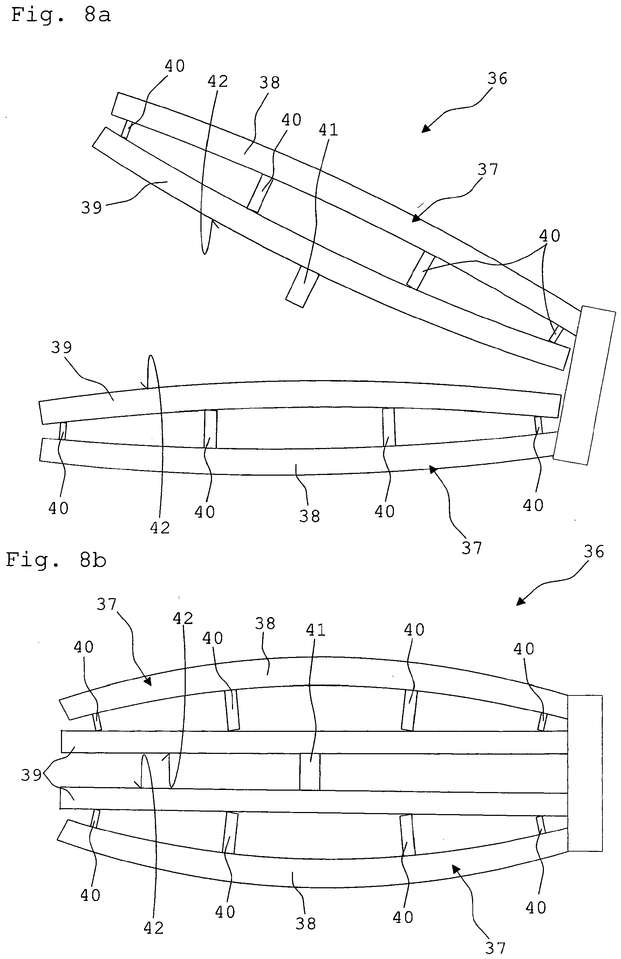

In Fig. 8a ist schematisch eine geöffnete Backplattenanordnung 36 mit einem Backzangengestell 37 dargestellt. Das Backzangengestellt weist zwei schwenkbar miteinander verbundene Gestellteile 38 auf, wobei jeweils eine Backplatte 39 an den Gestellteilen 38 angeordnet ist. Die Gestellteile 38 und die Backplatten 39 sind jeweils in entgegengesetzte Richtungen konvex vorgespannt, so dass ein Abstand zwischen den Gestellteilen 38 und den an den Gestellteilen 38 angeordneten Backplatten 39 in einem Randbereich kleiner ist als in einem mittleren Bereich.

Die Backplatten 39 liegen abschnittsweise an Halterungselementen 40 der Gestellteile 38 an. Zwischen den Backplatten 39 ist eine Anlageeinrichtung 41 angeordnet.

In Fig. 8b ist die in Fig. 8a abgebildete Backzangenanordnung 36 in einem geschlossenen Zustand schematisch dargestellt. In dem geschlossen Zustand liegt die Anlageeinrichtung 41 an beiden Backplatten 39 an, so dass die Backplatten 39 in Richtung ebener Backflächen 42 verformt werden. Durch die Verformung der Backplatten 39 werden die Gestellteile 38 über die Halterungselemente 40 weiter verformt, so dass eine durch die Verformung der Backplatten 39 und der Gestellteile 38 hervorgerufene und einem bei einem Backvorgang zwischen den geschlossenen Backplatten 39 entstehenden Dampfdruck entgegenwirkende Verformungsenergie erhalten bleibt.

## Patentansprüche

1. Backplattenanordnung (1, 36) für einen Waffelbackautomaten mit zwei schwenkbar miteinander verbundenen Backplatten (4, 10, 13, 16, 20, 39), **dadurch gekennzeichnet, dass** mindestens eine Backplatte (4, 10, 13, 16, 20, 39) jeweils bezüglich einer Backfläche (5, 23) konvex vorgespannt ist, so dass bei geschlossener Backplattenanordnung (1, 36) vor Beginn eines Backvorgangs ein Abstand in einem mittleren Bereich der Backplatten (4, 10, 13, 16, 20, 39) kleiner ist als ein Abstand in einem Randbereich der Backplatten (4, 10, 13, 16, 20, 39), um Verformungen der Backplatten (4, 10, 13, 16, 20, 39) während des Backvorgangs auszugleichen und dass die Backplattenanordnung (1, 36) eine Anlageeinrichtung (6, 17, 21, 41) aufweist, die so an der Backplattenanordnung (1, 36) angeordnet ist, dass die Backflächen (5) einer geschlossenen Backplattenanordnung (1, 36) einen Abstand zueinander aufweisen.

2. Backplattenanordnung (1, 36) gemäß Anspruch 1, **dadurch gekennzeichnet, dass** die Backplattenanordnung (1, 36) ein Backzangengestell (2, 37) mit zwei schwenkbar miteinander verbundenen Gestellteilen (3, 38) aufweist, wobei die Backplatten (4, 10, 13, 16, 20, 39) an den Gestellteilen (3, 38) angeordnet sind.

3. Backplattenanordnung (1, 36) gemäß Anspruch 1 oder Anspruch 2, **dadurch gekennzeichnet, dass** mindestens ein Anlageelement (7, 8, 11, 24) einer Anlageeinrichtung (6, 17, 21, 41) verstellbar ausgestaltet ist, so dass der Abstand der Backplatten (4, 10, 13, 16, 20, 39) der geschlossenen Backplattenanordnung (1, 36) einstellbar ist.

4. Backplattenanordnung (1, 36) gemäß einem der voranstehenden Ansprüche, **dadurch gekennzeichnet, dass** die Anlageeinrichtung (6, 17, 21, 41) an einer Backplatte (4, 10, 13, 16, 20, 39) angeordnet ist.

5. Backplattenanordnung (1, 36) gemäß Anspruch 4, **dadurch gekennzeichnet, dass** die Anlageeinrichtung (6, 17, 21, 41) an einem Rand (22) der Backfläche (5, 23) angeordnet ist.

6. Backplattenanordnung (1, 36) gemäß Anspruch 4, **dadurch gekennzeichnet, dass** die Anlageeinrichtung (6, 17, 21, 41) in dem mittleren Bereich an der Backplatte (4, 10, 13, 16, 20, 39) angeordnet ist.

7. Backplattenanordnung (1, 36) gemäß Anspruch 4, **dadurch gekennzeichnet, dass** die Anlageeinrichtung (6, 17, 21, 41) in einem mittleren Bereich einer der Backfläche (5, 23) gegenüberliegenden Oberseite (9, 12) der Backplatte (4, 10, 13, 16, 20, 39) an der Backplatte (4, 10, 13, 16, 20, 39) angeordnet ist.

8. Backplattenanordnung (1, 36) gemäß Anspruch 2 oder Anspruch 3, **dadurch gekennzeichnet, dass** die Anlageeinrichtung (6, 17, 21, 41) an einem Gestellteil (3, 38) angeordnet ist.

9. Backplattenanordnung (1, 36) gemäß einem der voranstehenden Ansprüche, **dadurch gekennzeichnet, dass** die Anlageeinrichtung (6, 17, 21, 41) mehrere Anlageelemente (7, 8, 11, 24) aufweist.

10. Backplattenanordnung (1, 36) gemäß einem der voranstehenden Ansprüche, **dadurch gekennzeichnet, dass** zwei Anlageelemente (7, 8, 11, 24) vorgesehen sind, die so an der Backplattenanordnung (1, 36) angeordnet sind, dass die Anlageelemente (7, 8, 11, 24) bei geschlossener Backplattenanordnung (1, 36) aneinander anliegen.

11. Backplattenanordnung (1, 36) gemäß Anspruch 9, **dadurch gekennzeichnet, dass** ein erstes, verstellbar ausgestaltetes Anlageelement (8) an einer ersten Oberseite (9) in einem mittleren Bereich der ersten Oberseite (9) einer ersten Backplatte (10) angeordnet ist und dass ein zweites, verstellbar ausgestaltetes Anlageelement (11) an einer zweiten Oberseite (12) in einem mittleren Bereich der zweiten Oberseite (12) an einer zweiten Backplatte (13) angeordnet ist, wobei das erste Anlageelement (8) und das zweite Anlageelement (11) bei geschlossener Backplattenanordnung (1, 36) aneinander anliegen.

12. Backplattenanordnung (1, 36) gemäß einem der voranstehenden Ansprüche, **dadurch gekennzeichnet, dass** die Anlageeinrichtung (6, 17, 21, 41) einen Dampfaustrittsbereich (15) der geschlossenen Backplattenanordnung (1, 36) lediglich abschnittsweise verdeckt.

13. Backplattenanordnung (1, 36) gemäß einem der voranstehenden Ansprüche, **dadurch gekennzeichnet, dass** die Anlageeinrichtung (6, 17, 21, 41) lösbar an der Backplattenanordnung (1, 36) angeordnet ist.

14. Backplattenanordnung (1, 36) gemäß einem der voranstehenden Ansprüche, **dadurch gekennzeichnet, dass** die Backplatte (4, 10, 13, 16, 20, 39) in einem Bereich in dem die Anlageeinrichtung (6, 17, 21, 41) an der Backplattenanordnung (1, 36) angeordnet ist, konvex vorgespannt ist.

15. Backplattenanordnung (1, 36) gemäß einem der voranstehenden Ansprüche, **dadurch gekennzeichnet, dass** die Anlageeinrichtung (6, 17, 21, 41) mindestens ein auf der der Backfläche (5, 23) gegenüberliegenden Oberseite (9, 12) einer Backplatte (4, 10, 13, 16, 20, 39) angeordnetes Stützelement (32) aufweist, wobei sich die Backplatte (4, 10, 13, 16, 20, 39) bei einer dampfdruckbedingten Verformung der Backplatte (4, 10, 13, 16, 20, 39) gegen das Stützelement (32) abstützt.

## Claims

1. Baking plates assembly (1, 36) for a waffle baking machine with two baking plates (4, 10, 13, 16, 20, 39) pivotably connected to one another, **characterized in that** at least one baking plate (4, 10, 13, 16, 20, 39) is respectively convexly prestressed with regard to a baking surface (5, 23), so that, in a closed baking plates assembly (1, 36), before the start of a baking process, a distance in a middle region of the baking plates (4, 10, 13, 16, 20, 39) is smaller than a distance in a peripheral region of the baking plates (4, 10, 13, 16, 20, 39), in order to compensate for deformations of the baking plates (4, 10, 13, 16, 20, 39) during the baking process, and **in that** the baking plates assembly (1, 36) comprises a contact unit (6, 17, 21, 41), which is arranged on the baking plates assembly (1, 36) such that the baking surfaces (5) of a closed baking plates assembly (1, 36) have a distance to one another.

2. Baking plates assembly (1, 36) according to claim 1, **characterized in that** the baking plates assembly (1, 36) comprises a baking tongs frame (2, 37) with two frame parts (3, 38) pivotably connected to one another, wherein the baking plates (4, 10, 13, 16, 20, 39) are arranged on the frame parts (3, 38).

3. Baking plates assembly (1, 36) according to claim 1 or claim 2, **characterized in that** at least one contact element (7, 8, 11, 24) of a contact unit (6, 17, 21, 41) is adjustably configured, so that the distance of the baking plates (4, 10, 13, 16, 20, 39) of the closed baking plates assembly (1, 36) is settable.

4. Baking plates assembly (1, 36) according to one of the preceding claims, **characterized in that** the contact unit (6, 17, 21, 41) is arranged on a baking plate (4, 10, 13, 16, 20, 39) .

5. Baking plates assembly (1, 36) according to claim 4, **characterized in that** the contact unit (6, 17, 21, 41) is arranged on an edge (22) of the baking surface (5, 23).

6. Baking plates assembly (1, 36) according to claim 4, **characterized in that** the contact unit (6, 17, 21, 41) is arranged in the middle region on the baking plate (4, 10, 13, 16, 20, 39).

7. Baking plates assembly (1, 36) according to claim 4, **characterized in that** the contact unit (6, 17, 21, 41) is arranged on the baking plate (4, 10, 13, 16, 20, 39), in a middle region, of an upper side (9, 12) of the baking plate (4, 10, 13, 16, 20, 39) opposite the baking surface (5, 23).

8. Baking plates assembly (1, 36) according to claim 2 or claim 3, **characterized in that** the contact unit (6, 17, 21, 41) is arranged on a frame part (3, 38).

9. Baking plates assembly (1, 36) according to one of the preceding claims, **characterized in that** the contact unit (6, 17, 21, 41) comprises multiple contact elements (7, 8, 11, 24).

10. Baking plates assembly (1, 36) according to one of the preceding claims, **characterized in that** two contact elements (7, 8, 11, 24) are provided, which are arranged on the baking plates assembly (1, 36) such that the contact elements (7, 8, 11, 24), in a closed baking plates assembly (1, 36), abut on one another.

11. Baking plates assembly (1, 36) according to claim 9, **characterized in that** a first, adjustably configured contact element (8) is arranged on a first upper side (9) in a middle region of the first upper side (9) of a first baking plate (10), and **in that** a second, adjustably configured contact element (11) is arranged on a second upper side (12) in the middle region of the second upper side (12) on a second baking plate (13), wherein the first contact element (8) and the second contact element (11) abut on one another in a closed baking plates assembly (1, 36) .

12. Baking plates assembly (1, 36) according to one of the preceding claims, **characterized in that** the contact unit (6, 17, 21, 41) covers a steam outlet region (15) of the closed baking plates assembly (1, 36) only in sections.

13. Baking plates assembly (1, 36) according to one of the preceding claims, **characterized in that** the contact unit (6, 17, 21, 41) is detachably arranged on the baking plates assembly (1, 36).

14. Baking plates assembly (1, 36) according to one of the preceding claims, **characterized in that** the baking plates (4, 10, 13, 16, 20, 39) is convexly prestressed in a region in which the contact unit (6, 17, 21, 41) is arranged on the baking plates assembly (1, 36).

15. Baking plates assembly (1, 36) according to one of the preceding claims, **characterized in that** the contact unit (6, 17, 21, 41) comprises at least one support element (32) arranged on the upper side (9, 12), of a baking plate (4, 10, 13, 16, 20, 39), opposite of the baking surface (5, 23), wherein the baking plate (4, 10, 13, 16, 20, 39) rests against the support element (32) in a steam-pressure contingent deformation of the baking plate (6, 10, 13, 16, 20, 39) .

## Revendications

1. Agencement de plaques de cuisson (1, 36) pour un gaufrier automatique avec deux plaques de cuisson (4, 10, 13, 16, 20, 39) reliées l'une à l'autre de manière à pouvoir pivoter, **caractérisé en ce qu'**au moins une plaque de cuisson (4, 10, 13, 16, 20, 39) est précontrainte de manière convexe par rapport à une surface de cuisson (5, 23) de telle sorte que, lorsque l'agencement de plaques de cuisson (1, 36) est fermé, avant le début d'une opération de cuisson, un écart dans une zone centrale des plaques de cuisson (4, 10, 13, 16, 20, 39) est inférieur à un écart dans une zone du bord des plaques de cuisson (4, 10, 13, 16, 20, 39) afin de compenser des déformations des plaques de cuisson (4, 10, 13, 16, 20, 39) durant l'opération de cuisson et **en ce que** l'agencement de plaques de cuisson (1, 36) comporte un dispositif d'appui (6, 17, 21, 41) qui est agencé sur l'agencement de plaques de cuisson (1, 36) de telle sorte que les surfaces de cuisson (5) d'un agencement de plaques de cuisson (1, 36) fermé présentent un certain écart entre elles.

2. Agencement de plaques de cuisson (1, 36) selon la revendication 1, **caractérisé en ce que** l'agencement de plaques de cuisson (1, 36) comprend un bâti pour pince de cuisson (2, 37) avec deux parties de bâti (3, 38) reliées entre elles de manière à pouvoir pivoter, les plaques de cuisson (4, 10, 13, 16, 20, 39) étant disposées sur les parties de bâti (3, 38).

3. Agencement de plaques de cuisson (1, 36) selon la revendication 1 ou la revendication 2, **caractérisé en ce qu'**au moins un élément d'appui (7, 8, 11, 24) d'un dispositif d'appui (6, 17, 21, 41) est conçu de manière réglable de telle sorte que l'écart des plaques de cuisson (4, 10, 13, 16, 20, 39) de l'agencement de plaques de cuisson (1, 36) fermé peut être ajusté.

4. Agencement de plaques de cuisson (1, 36) selon l'une quelconque des revendications précédentes, **caractérisé en ce que** le dispositif d'appui (6, 17, 21, 41) est agencé sur une plaque de cuisson (4, 10, 13, 16, 20, 39).

5. Agencement de plaques de cuisson (1, 36) selon la revendication 4, **caractérisé en ce que** le dispositif d'appui (6, 17, 21, 41) est agencé sur un bord (22) de la surface de cuisson (5, 23).

6. Agencement de plaques de cuisson (1, 36) selon la revendication 4, **caractérisé en ce que** le dispositif d'appui (6, 17, 21, 41) est agencé dans la zone centrale sur la plaque de cuisson (4, 10, 13, 16, 20, 39).

7. Agencement de plaques de cuisson (1, 36) selon la revendication 4, **caractérisé en ce que** le dispositif d'appui (6, 17, 21, 41) est agencé dans une zone centrale d'un côté supérieure (9, 12), opposé à la surface de cuisson (5, 23), de la plaque de cuisson (4, 10, 13, 16, 20, 39) sur la plaque de cuisson (4, 10, 13, 16, 20, 39).

8. Agencement de plaques de cuisson (1, 36) selon la revendication 2 ou la revendication 3, **caractérisé en ce que** le dispositif d'appui (6, 17, 21, 41) est agencé sur une partie de bâti (3, 38).

9. Agencement de plaques de cuisson (1, 36) selon l'une quelconque des revendications précédentes, **caractérisé en ce que** le dispositif d'appui (6, 17, 21, 41) présente plusieurs éléments d'appui (7, 8, 11, 24).

10. Agencement de plaques de cuisson (1, 36) selon l'une quelconque des revendications précédentes, **caractérisé en ce que** deux éléments d'appui (7, 8, 11, 24) sont prévus, qui sont disposés sur l'agencement de plaques de cuisson (1, 36) de telle sorte que les éléments d'appui (7, 8, 11, 24) sont en appui les uns contre les autres lorsque l'agencement de plaques de cuisson (1, 36) est fermé.

11. Agencement de plaques de cuisson (1, 36) selon la revendication 9, **caractérisé en ce qu'**un premier élément d'appui (8) conçu de manière réglable, est disposé sur un premier côté supérieure (9) dans une zone centrale du premier côté supérieure (9) d'une première plaque de cuisson (10) et **en ce qu'**un deuxième élément d'appui (11) conçu de manière réglable, est disposé sur un deuxième côté supérieure (12) dans une zone centrale du deuxième côté supérieure (12) sur une deuxième plaque de cuisson (13), le premier élément d'appui (8) et le deuxième élément d'appui (11) étant en appui l'un contre l'autre lorsque l'agencement de plaques de cuisson (1, 36) est fermé.

12. Agencement de plaques de cuisson (1, 36) selon l'une quelconque des revendications précédentes, **caractérisé en ce que** le dispositif d'appui (6, 17, 21, 41) recouvre, seulement par sections, une zone de sortie de vapeur (15) de l'agencement de plaques de cuisson (1, 36) fermé.

13. Agencement de plaques de cuisson (1, 36) selon l'une quelconque des revendications précédentes, **caractérisé en ce que** le dispositif d'appui (6, 17, 21, 41) est agencé de manière amovible sur l'agencement de plaques de cuisson (1, 36).

14. Agencement de plaques de cuisson (1, 36) selon l'une quelconque des revendications précédentes, **caractérisé en ce que** la plaque de cuisson (4, 10, 13, 16, 20, 39) est précontrainte de manière convexe dans une zone dans laquelle le dispositif d'appui (6, 17, 21, 41) est agencé sur l'agencement de plaques de cuisson (1, 36).

15. Agencement de plaques de cuisson (1, 36) selon l'une quelconque des revendications précédentes, **caractérisé en ce que** le dispositif d'appui (6, 17, 21, 41) comporte au moins un élément de support (32) disposé sur le côté supérieure (9, 12), face à la surface de cuisson (5, 23), d'une plaque de cuisson (4, 10, 13, 16, 20, 39), la plaque de cuisson (4, 10, 13, 16, 20, 39) étant en appui contre l'élément de support (32) lors d'une déformation de la plaque de cuisson (4, 10, 13, 16, 20, 39) causée par la pression de la vapeur.
